# EUROPEAN PATENT APPLICATION

(11) **EP 4 661 486 A1**
(43) Date of publication of application: **10.12.2025**
(21) Application number: 23920020.7
(22) Date of filing: 27.12.2023
(51) Int. Cl.: H04W 28/06, H04W 80/02, H04W 84/12

(54) **WIRELESS DEVICE AND WIRELESS COMMUNICATION METHOD**

(30) Priority: 02.02.2023 JP 2023014580
(71) Applicant: Panasonic Intellectual Property Corporation of America, Torrance, CA 90504 (US)
(72) Inventor: NAKANO, Takayuki, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2023/047026
(87) International publication number: WO 2024/161885

(57) **Abstract**

A wireless device according to the present invention has: a control unit that generates a frame including an AIML data collection subfield that instructs a station (STA) corresponding to artificial intelligence (AI)/machine learning (ML) to transmit data; and a communication unit that transmits the generated frame.

## Description

### Technical Field

The present disclosure relates to a wireless apparatus and a wireless communication method.

### Background Art

Technologies for a wireless Local Area Network (LAN) using Artificial Intelligence (hereinafter referred to as "AI") or Machine Learning (hereinafter referred to as "ML") have been studied in academia and industry (for example, Non-Patent Literature (hereinafter referred to as "NPL") 1).

In the Institute of Electrical and Electronics Engineers (IEEE) 802.11 working group, a Topic Interest Group (TIG) concerning AI/ML (hereinafter also referred to as "AIML") was established in July 2022, and discussions have begun (for example, NPL 2).

Technologies being considered for application to the wireless LAN include studies on Channel State Information (CSI) compression aimed at reducing feedback volume of CSI, optimization of channel access through Distributed channel access, and optimization of Beamforming (for example, NPL 3).

### Citation List

### Non-Patent Literature

NPL 1
   S. Szott, K. Kosek-Szott, P. Gawlowicz, J. T. Gomez, B. Bellalta, A. Zubow, F. Dressler, "WiFi Meets ML: A Survey on Improving IEEE 802.11 Performance with Machine Learning" IEEE Communications Surveys & Tutorials, vol. 24, no. 3, pp. 1843-1893
NPL 2
   IEEE 802.11-22/847r3, AIML TIG July 2022 Agenda
NPL 3
   IEEE 802.11-22/950r2, Discussion on Connection between AI/ML & Wireless LAN

### Summary of Invention

Methods and frame configurations necessary for data collection to perform operations for AI/ML have not been studied.

A wireless apparatus according to one exemplary embodiment of the present disclosure includes: a controller, which in operation, generates a frame containing an AIML Data Collection subfield instructing a Station (STA) compatible with Artificial Intelligence (AI)/Machine Learning (ML) to transmit data; and a communicator, which in operation, transmits the frame generated.

A wireless communication method according to one exemplary embodiment of the present disclosure include: generating a frame containing an AIML Data Collection subfield instructing a Station (STA) compatible with Artificial Intelligence (Al)/Machine Learning (ML) to transmit data; and transmitting the frame generated.

It should be noted that general or specific embodiments may be implemented as a system, an apparatus, a method, an integrated circuit, a computer program, a storage medium, or any selective combination thereof.

The STA instructing data collection specifies and indicates, to each STA, the AIML Data Collection Subfield instructing data collection for AI/ML. The STA to which the subfield has been specified transmits the data instructed to be collected.

The STA can perform the data collection necessary for operations for AI/ML.

### Brief Description of Drawings

FIG. 1 illustrates an example of a Data Collection procedure for AI/ML;
FIG. 2 illustrates interface names and functions of a data collection setup phase;
FIG. 3 illustrates interface names and functions of a data collection phase;
FIG. 4 illustrates the interface names and functions of a data collection termination phase;
FIG. 5 illustrates an example where an AIML Data Collection Trigger frame is transmitted from an AIML initiating STA to a plurality of AIML peer STAs;
FIG. 6 illustrates an example of a frame sequence where a beamformer collects measurement results of a sounding NDP for AIML from a beamformee;
FIG. 7 illustrates another example of a frame sequence where a beamformer collects measurement results of a sounding NDP for AIML from a beamformee;
FIG. 8 illustrates an example of a Trigger frame format for Data Collection;
FIG. 9 illustrates the type of Trigger frame corresponding to a Trigger Type Subfield value specified by Trigger Type;
FIG. 10 illustrates each function corresponding to Data Collection Function ID;
FIG. 11 illustrates examples of AIML models and types of information requested corresponding to the AIML model ID;
FIG. 12 illustrates examples of states and types of information requested corresponding to Data Collection Purpose ID;
FIG. 13 illustrates an example of a Data Collection frame format;
FIG. 14 illustrates an example definition of Type and Subtype subfields in the Frame Control field;
FIG. 15 illustrates an example definition of a Control Frame Extension value;
FIG. 16 illustrates the structure of a Data Collection Action frame;
FIG. 17 illustrates an example structure of Data Collection Information Element;
FIG. 18 illustrates the configuration of an STA; and
FIG. 19 illustrates the configuration of another STA.

### Description of Embodiments

According to one exemplary embodiment of the present disclosure, a communication apparatus (also referred to as a Station (STA)) can specify and indicate the AIML Data Collection subfield instructing each of the other STAs to collect data for AI/ML.

### <Data Collection Procedure>

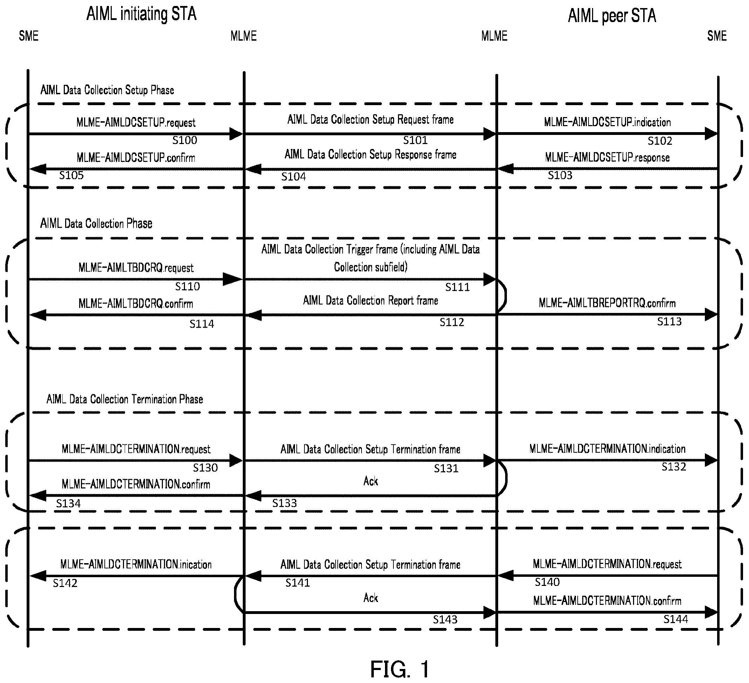

FIG. 1 shows an example of a Data Collection procedure for AI/ML. FIG. 1 shows an example procedure consisting of three phases: an AIML data collection setup phase, an AIML data collection phase, and an AIML data collection termination phase. The AIML initiating STA is the STA which instructs the AIML Data Collection, and the AIML peer STA refers to the STA which receives the instruction.

The AIML data collection setup phase is the phase for setup of Data Collection for AI/ML. The AIML data collection phase is the phase for performing AIML data collection using an AIML Data Collection Trigger frame. The AIML data collection termination phase is the phase for terminating the Data Collection setup for AI/ML. FIG. 1 shows two procedures for an AIML measurement termination phase: one starting from the AIML initiating STA and the other from the AIML peer STA. In the AIML data collection termination phase, either one of the procedures may be used.

A Station Management Entity (SME) indicates terminal management functions, and a Media Access Control (MAC) sublayer management entity (MLME) indicates MAC layer management functions.

The AIML initiating STA is the STA that instructs the AIML Data Collection, and the AIML peer STA is the STA that receives the Data Collection instruction. The AIML initiating STA can perform the Data Collection procedure for AI/ML described in FIG. 1 for each AIML peer STA.

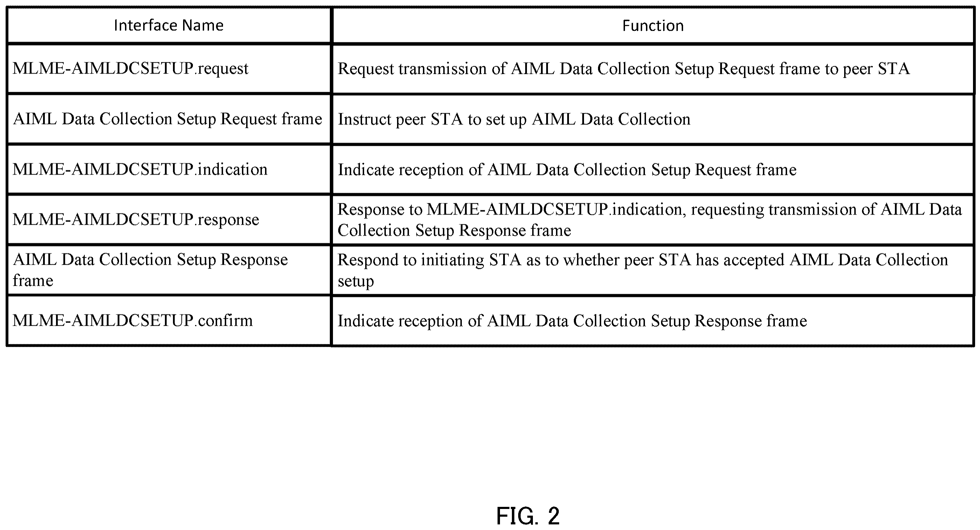

The procedure of the AIML data collection setup phase is explained. FIG. 2 shows the interface names (frame names) and functions of the data collection setup phase in the exemplary Data Collection procedure of FIG. 1.

First, the SME of the AIML initiating STA transmits an MLME-AIMLDCSETUP.request to the MLME of the AIML initiating STA (S100). The MLME-AIMLDCSETUP.request is a frame that requests the transmission of an AIML Data Collection Setup Request frame to the AIML peer STA.

Upon receiving the MLME-AIMLDCSETUP.request, the MLME of the AIML initiating STA transmits an AIML Data Collection Setup Request frame to the MLME of the AIML peer STA (S101). The AIML Data Collection Setup Request frame is a frame that instructs the AIML peer STA to set up AIML Data Collection.

The MLME of the AIML peer STA that received the AIML Data Collection Setup Request frame transmits an MLME-AIMLDCSETUP.indication to the SME of the AIML peer STA (S102). The MLME-AIMLDCSETUP.indication is a frame indicating that the AIML Data Collection Setup Request frame has been received.

The SME of the AIML peer STA that received the MLME-AIMLDCSETUP.indication transmits an MLME-AIMLDCSETUP.response to the MLME of the AIML peer STA(S103). The MLME-AIMLDCSETUP.response is a response signal to the MLME-AIMLDCSETUP.indication and is a frame requesting the transmission of the AIML Data Collection Setup Response frame.

The MLME of the AIML peer STA that received the MLME-AIMLDCSETUP.response transmits an AIML Data Collection Setup Response frame to the MLME of the AIML initiating STA (S104). The AIML Data Collection Setup Response frame is a frame that responds to the AIML initiating STA whether the AIML peer STA has accepted the AIML Data Collection setup.

The MLME of the AIML initiating STA that received the AIML Data Collection Setup Response frame transmits an MLME-AIMLDCSETUP.confirm to the SME of the AIML initiating STA (S105). The MLME-AIMLMSMTSETUP.confirm is a signal indicating that the AIML Data Collection Setup Response frame has been received.

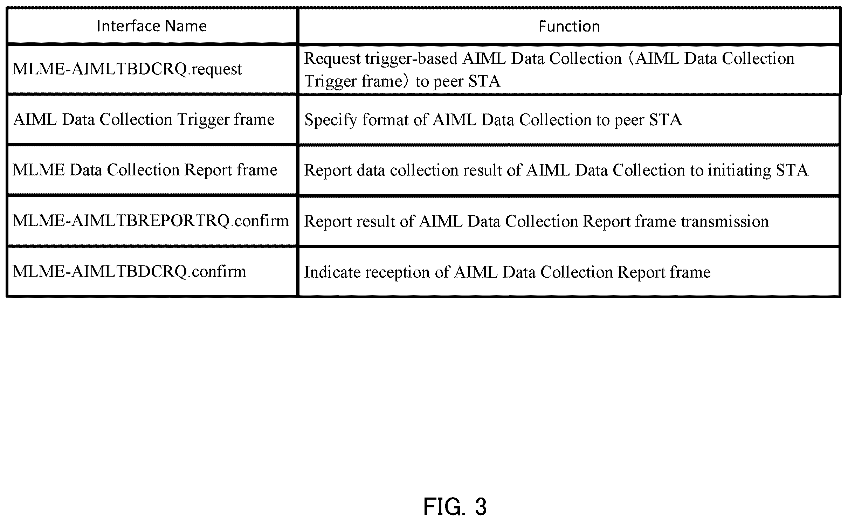

The procedure of the AIML data collection phase is explained. FIG. 3 shows the interface names and functions in the data collection phase of the Data Collection procedure example in FIG. 1.

First, the SME of the AIML initiating STA that received the MLME-AIMLDCSETUP.confirm in the AIML data collection setup phase transmits an MLME-AIMLTBDCRQ.request to the MLME of the AIML initiating STA (S110). The MLME-AIMLTBDCRQ.request is a frame requesting trigger-based AIML Data Collection to the AIML peer STA. The AIML Data Collection is performed, for example, by an AIML Data Collection Trigger frame.

The MLME of the AIML initiating STA that received the MLME-AIMLTBDCRQ.request transmits an AIML Data Collection Trigger frame to the MLME of the AIML peer STA (S111). The AIML Data Collection Trigger frame is a frame that specifies the format of AIML Data Collection to the AIML peer STA and includes an AIML Data Collection subfield.

The MLME of the AIML peer STA that received the AIML Data Collection Trigger frame transmits an AIML Data Collection Report frame to the MLME of the AIML initiating STA(S112). The AIML Data Collection Report frame is a frame that reports data collection results of AIML Data Collection to the initiating STA. The AIML Data Collection Report frame is transmitted in the format specified by the AIML Data Collection Trigger frame.

Additionally, the MLME of the AIML peer STA that received the AIML Data Collection Trigger frame transmits an MLME-AIMLTBREPORTRQ.confirm to the SME of the AIML peer STA (S113). The MLME-AIMLTBREPORTRQ.confirm is a frame that reports the result of the AIML Data Collection Report frame transmission.

The MLME of the AIML initiating STA that received the AIML Data Collection Report frame transmits an MLME-AIMLTBDCRQ.confirm to the SME of the AIML initiating STA (S114). The MLME-AIMLTBDCRQ.confirm is a frame indicating that the AIML Data Collection Report frame has been received.

FIG. 1 illustrates an example where the MLME notifies the SME of the data collection result report received by MLME-AIMLTBDCRQ.confirm. However, the measurement result may be notified to an external application or a higher layer.

FIG. 1 illustrates an example in which an STA transmits the measurement result to the counterpart STA, but the STA may perform an operation utilizing the measurement result without transmitting the measurement result or may transmit the measurement result to the counterpart STA while performing an operation utilizing the measurement result at the transmitter STA. The SME or the MLME may include an application for performing the operation utilizing the measurement result.

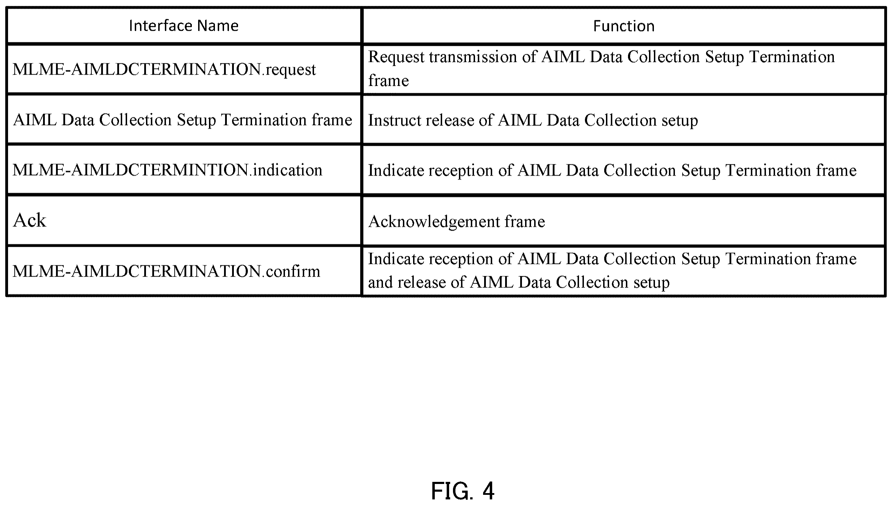

The AIML data collection termination phase is explained in order, starting with the procedure initiated by the AIML initiating STA and then the procedure initiated by the AIML peer STA. FIG. 4 shows the interface names and functions in the data collection termination phase of the Data Collection procedure example in FIG. 1.

When starting the AIML measurement termination phase from the AIML initiating STA, first, the SME of the AIML initiating STA transmits an MLME-AIMLDCTERMINATION.request to the MLME of the AIML initiating STA (S130). The MLME-AIMLDCTERMINATION.request is a frame requesting the transmission of an AIML Data Collection Setup Termination frame.

The MLME of the AIML initiating STA that received the MLME-AIMLDCTERMINATION.request transmits an AIML Data Collection Setup Termination frame to the MLME of the AIML peer STA (S131). The AIML Data Collection Setup Termination frame is a frame that instructs the release of the AIML Data Collection setup.

The MLME of the AIML peer STA that received the AIML Data Collection Setup Termination frame transmits an MLME-AIMLDCTERMINATION.indication to the SME of the AIML peer STA (S132). The MLME-AIMLDCTERMINATION.indication is a frame indicating that the AIML Data Collection Setup Termination frame has been received.

Furthermore, the MLME of the AIML peer STA that received the AIML Data Collection Setup Termination frame transmits an Ack to the MLME of the AIML initiating STA (S133). The Ack is an acknowledgment frame.

The MLME of the AIML initiating STA that received the Ack transmits an MLME-AIMLDCTERMINATION.confirm to the SME of the AIML initiating STA (S134). The MLME-AIMLDCTERMINATION.confirm is a frame indicating that the AIML Data Collection Setup Termination frame has been received and the AIML Data Collection setup has been released.

When starting the AIML measurement termination phase from the AIML peer STA, first, the SME of the AIML peer STA transmits an MLME-AIMLDCTERMINATION.request to the MLME of the AIML peer STA (S140).

The MLME of the AIML peer STA that received the MLME-AIMLDCTERMINATION.request transmits an AIML Data Collection Setup Termination frame to the MLME of the AIML initiating STA (S141).

The MLME of the AIML initiating STA that received the AIML Data Collection Setup Termination frame transmits an MLME-AIMLDCTERMINATION.indication to the SME of the AIML initiating STA (S142).

Furthermore, the MLME of the AIML initiating STA that received the AIML Data Collection Setup Termination frame transmits an Ack to the MLME of the AIML peer STA (S143).

The MLME of the AIML peer STA that received the Ack transmits an MLME-AIMLDCTERMINATION.confirm to the SME of the AIML peer STA (S144).

Through the above procedure, a Node can specify the Data Collection format for AI/ML to each of the other Nodes.

Three examples of frame sequences for the AIML Data Collection Trigger frame and the AIML Data Collection Report frame in the AI/ML data collection phase are shown. The AIML Data Collection Report frame may be a Trigger Based Physical Layer Convergence Protocol (PLCP) Protocol Data Unit (TB PPDU).

### <Example 1>

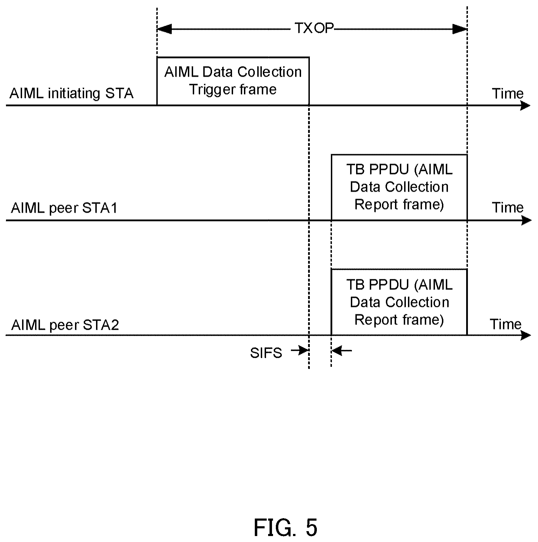

FIG. 5 shows an example where an AIML Data Collection Trigger frame is transmitted from an AIML initiating STA to a plurality of AIML peer STAs (e.g., AIML peer STA1 and AIML peer STA2).

In the AIML Data Collection Trigger frame, an ID and a Data Collection subfield for AI/ML are specified for each AIML peer STA. Each AIML peer STA responds with the specified Data Collection subfield. In the example of FIG. 5, each AIML Peer STA transmits a Data Collection Report frame after a Short InterFrame Space (SIFS) following the transmission of the AIML Data Collection Trigger frame, so AIML peer STA1 and AIML peer STA2 transmit the AIML Data Collection Report frame simultaneously. Each AIML Peer STA may transmit sequentially or after delaying by their respective specified times. Also, while the example shows the AIML Peer STA transmitting the AIML Data Collection Report frame only once, it may be defined to transmit periodically.

### <Example 2>

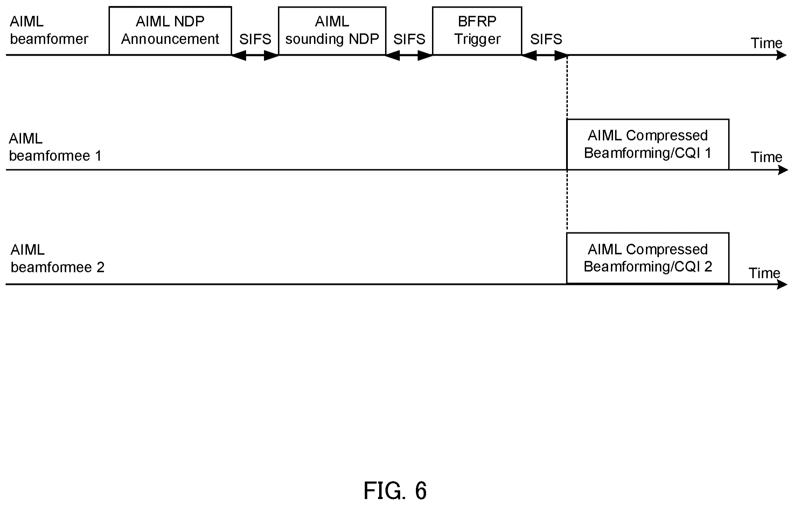

FIG. 6 shows an example of a frame sequence where a beamformer, which is an STA that performs beamforming and transmission, collects measurement results of a sounding Null Data PPDU (NDP) for AIML from a beamformee, which is an STA that receives a beamformed transmission.

Instead of transmitting an AIML Data Collection Trigger frame in FIG. 1, first, an AIML NDP Announcement specifying the format of the sounding NDP for AIML is transmitted, followed by the transmission of the AIML sounding NDP, which is a sounding NDP for AIML, after the SIFS following the AIML NDP Announcement transmission, and then a Beamforming Report Poll (BFRP) Trigger frame is transmitted after the SIFS following the transmission of the AIML sounding NDP to request feedback for AIML Compressed Beamforming/CQI, which is the measurement result of the AIML Sounding NDP. In the example of FIG. 6, feedback is received from a plurality of STAs (AIML beamformee 1 and AIML beamformee 2) via the BFRP Trigger frame. Each beamformee transmits the AIML Compressed Beamforming/CQI after the SIFS following the reception of the BFRP Trigger frame, resulting in simultaneous transmission of the AIML Compressed Beamforming/CQI from a plurality of beamformees.

### <Example 3>

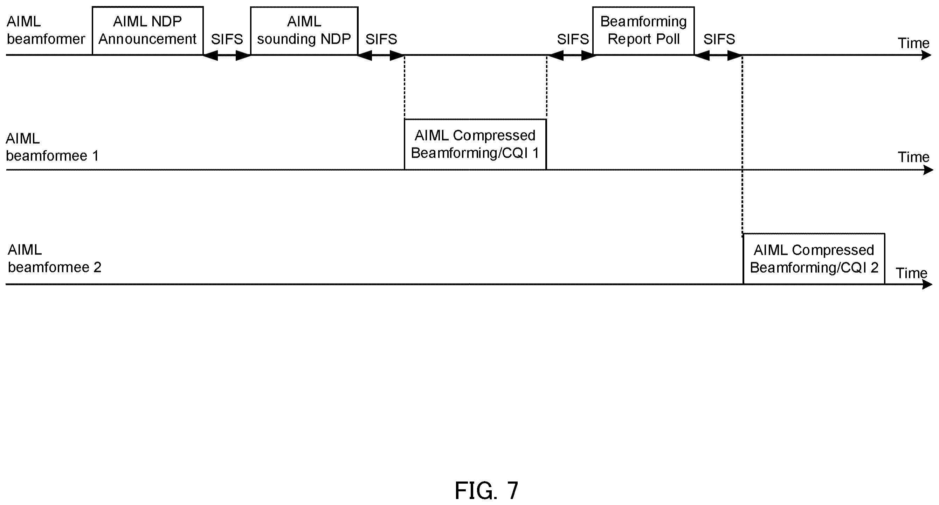

FIG. 7 shows another example of a frame sequence where a beamformer, which is an STA that performs beamforming and transmission, collects measurement results of a sounding NDP for AIML from a beamformee, which is an STA that receives the beamformed transmission.

Instead of transmitting an AIML Data Collection Trigger frame in FIG. 1, first, an AIML NDP Announcement specifying the format of the sounding NDP for AIML is transmitted, followed by the transmission of the AIML sounding NDP, which is a sounding NDP for AIML, after the SIFS following the AIML NDP Announcement transmission. After the SIFS of the AIML sounding NDP transmission, feedback of the AIML Compressed Beamforming/CQI, which is the measurement result of the AIML Sounding NDP, is received from a specific STA (e.g., AIML beamformee 1). The AIML beamformer transmits a Beamforming Report Poll after the SIFS following the reception of the AIML Compressed Beamforming/CQI and receives feedback of the AIML Compressed Beamforming/CQI as the measurement result of the AIML Sounding NDP from another STA (e.g., AIML beamformee 2). Another STA (e.g., AIML beamformee 2) transmits feedback of the AIML Compressed Beamforming/CQI after the SIFS following the reception of the Beamforming Report Poll.

As described above, instructions for Data Collection for AI/ML can be given to each STA.

### <Embodiment 1>

In Embodiment 1, the Trigger frame is defined as a frame that instructs AIML Data Collection when the Trigger Type of the Trigger frame is a specific value (e.g., currently undefined value such as 8). Here, the undefined value refers to a value that has not been defined so far but may be newly defined in the future, and it may also be called a reserved value or a disregard value.

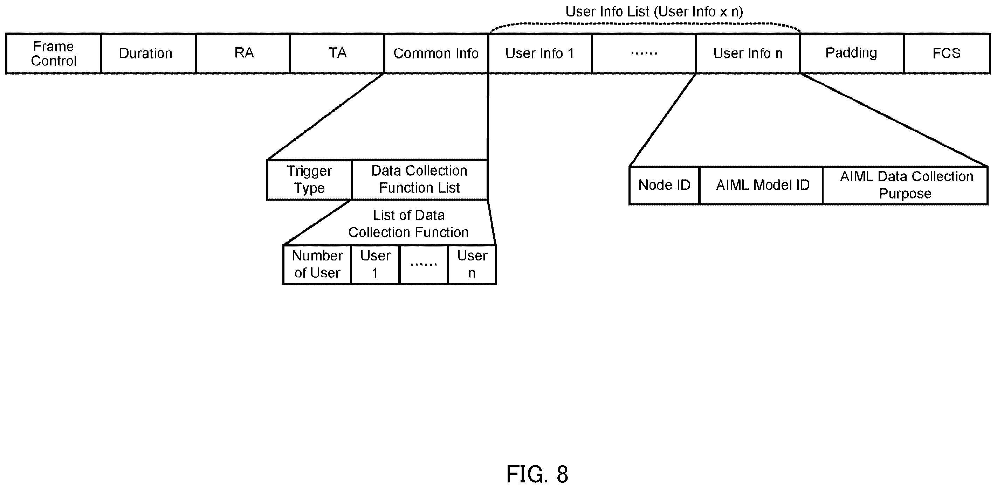

FIG. 8 shows an example of a Trigger frame format for Data Collection. The Common Info of the Trigger frame includes the Trigger Type. The Trigger Type specifies the type of the Trigger frame.

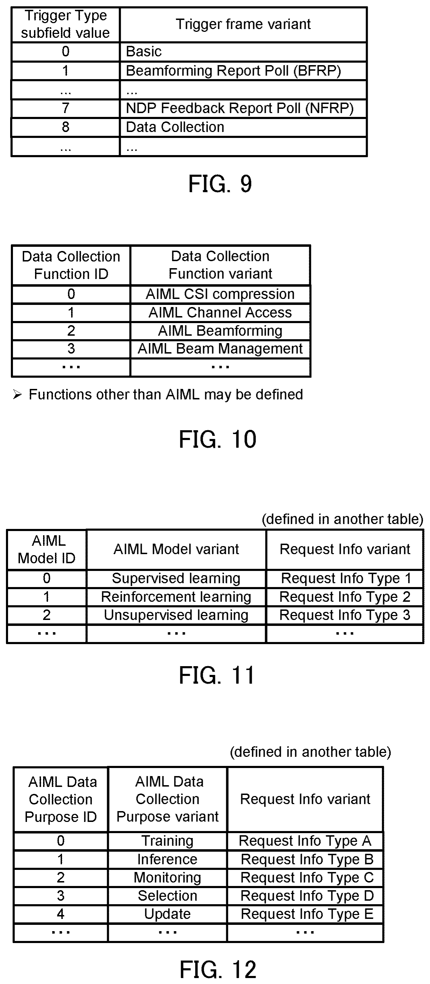

FIG. 9 shows the type (variant) of Trigger frame corresponding to the Trigger Type Subfield value specified by the Trigger Type. As shown in FIG. 9, for example, when the value of the Trigger Type is currently an undefined value of 8, it includes a Data Collection Function subfield. FIG. 9 shows an example where the Trigger Type is 8, but it may be defined as other undefined values.

When the Trigger Type indicates Data Collection (Trigger Type subfield value = 8), the Common Info has a Data Collection Function List. The Data Collection Function List includes the number of users (Number of User) and the Data Collection Function for each user. The Data Collection Function List is information transmitted in the AIML Data Collection subfield.

The Data Collection Function is indicated by Data Collection Function ID. FIG. 10 shows the Data Collection function (function variant) corresponding to the Data Collection Function ID. For example, ID = 0 is CSI compression for AIML, ID = 1 is Channel Access for AIML, ID = 2 is Beamforming for AIML, and ID = 3 is Beam Management for AIML. Additionally, functions other than AIML may also be defined in this table.

The content of the User Info List, which includes User Info 1 to n, is determined corresponding to the Data Collection Function for each User specified in the Data Collection Function List. Here, n is the number of Users. User Info n includes, for example, Node ID, AIML Model ID information (AIML Model ID), and the data collection purpose (AIML Data Collection Purpose).

The Node ID specifies the Node for which User Info n is configured.

Corresponding to the AIML Model ID information, the AIML model indicating the learning method, etc., and the type of information requested are specified. The type of information requested may be specified in a separate table. FIG. 11 shows an example of AIML Model types (learning type: AIML Model variant) and types of information requested (Request Info Variant) corresponding to AIML Model ID. For example, AIML Model ID = 0 is Supervised learning, AIML Model ID = 1 is Reinforcement learning, and AIML Model ID = 2 is Unsupervised learning. The type of information requested may be determined for each learning type or may be commonly determined for all learning types.

Additionally, corresponding to the AIML Model ID, deployment information of the AIML model may be specified. The deployment information of the AIML model may specify a deployment target as an Access Point (AP) or Non-AP STA, or the deployment target may be specified by the aforementioned Node ID.

For the data collection purpose, corresponding to the Data Collection Purpose ID, states such as AIML Training, Inference, Monitoring, Selection, and Update, and the type of information requested for each state are specified. FIG. 12 shows an example of states (AIML Data Collection Purpose variant) and types of information requested (Request Info variant) corresponding to the Data Collection Purpose ID (AIML Data Collection Purpose ID). The type of information requested may be specified in a separate table. For example, AIML Data Collection Purpose ID = 0 is Training, AIML Data Collection Purpose ID = 1 is Inference, AIML Data Collection Purpose ID = 2 is Monitoring, AIML Data Collection Purpose ID = 3 is Selection, and AIML Data Collection Purpose ID = 4 is Update. The type of information requested may be determined for each data collection purpose or may be commonly determined for all data collection purposes.

Although User Info or User Info List are described, they may also be referred to as STA Info, Per STA Info, or STA Info List. While Node ID, AIML Model ID, and AIML Data Collection Purpose are included as elements of User Info n, they may also be structured within Trigger Dependent User Info in the User Info field.

In this way, when the Trigger Type of the Trigger frame is a specific value, the Trigger frame is defined as a frame containing the Data Collection subfield, and by providing the Data Collection Function List, the Data Collection format for AI/ML can be specified for each User.

### <Embodiment 2>

In Embodiment 2, when the Subtype value or Control Frame Extension value of the Frame Control field is a specific value (for example, when an undefined value such as Subtype value is 0001 or the Control Frame Extension value is 1100), a frame is defined as instructing AIML Data Collection.

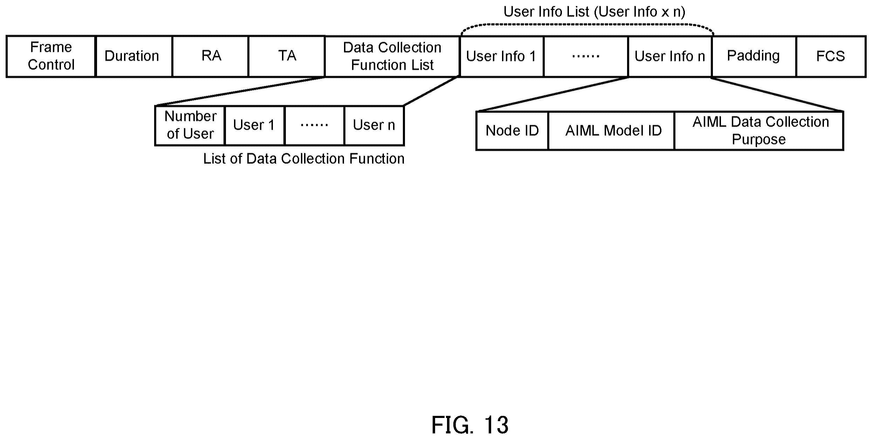

FIG. 13 shows an example format of a Data Collection frame. The Data Collection frame includes a Frame Control field. The Frame Control field includes Type and Subtype subfields.

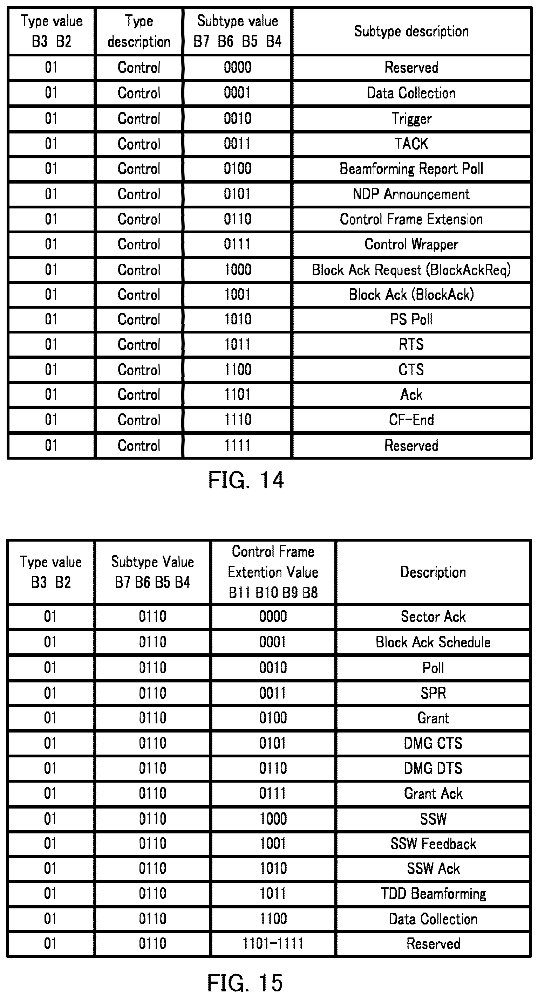

FIG. 14 shows an example definition of the Type and Subtype subfields of the Frame Control field. As shown in FIG. 14, when the Subtype value of the Frame Control field is the currently undefined value 0001, the frame is defined as a frame containing the Data Collection subfield. FIG. 14 shows an example with Subtype value 0001, but the Subtype value may be defined with other undefined values.

When the Subtype value of the Frame Control field is 0110, a Control Frame Extension value is included. FIG. 15 shows an example definition of the Control Frame Extension value. As shown in FIG. 15, when the Control Frame Extension value is the currently undefined value 1100, the frame may be defined as a frame containing a Data Collection subfield. The figure shows an example in which the Control Frame Extension value is 1100, but the value may be defined with other currently undefined values.

As mentioned above, when the Subtype value or Control Frame Extension value of the Frame Control field is a specific value, Data Collection Function List is included. The Data Collection Function List includes the number of users (Number of User) and the Data Collection Function for each User. The content of Data Collection Function ID is the same as that shown in Embodiment 1 in FIG. 10.

Additionally, the content of the User Info List, which includes User Info 1 to n, is the same as in Embodiment 1. Each of User Info 1 to n includes, for example, Node ID, AIML Model ID information (AIML Model ID), and the data collection purpose (AIML Data Collection Purpose). The content of User Info 1 to n is determined corresponding to the Data Collection Function for each User specified in the Data Collection Function List. The content of User Info n may include the same content as in Embodiment 1. The AIML Model ID information is as shown in FIG. 11, and the data collection purpose may be as shown in FIG. 12.

In this way, when the Subtype value or Control Frame Extension value of the Frame Control field is a specific value, a frame is defined as containing the Data Collection Function List, and by providing the Data Collection Function List, the Data Collection format for AI/ML can be specified for each User.

### <Embodiment 3>

In Embodiment 3, a frame is defined as instructing Data Collection when the Category of an Action frame is a specific value (for example, an undefined value such as 38).

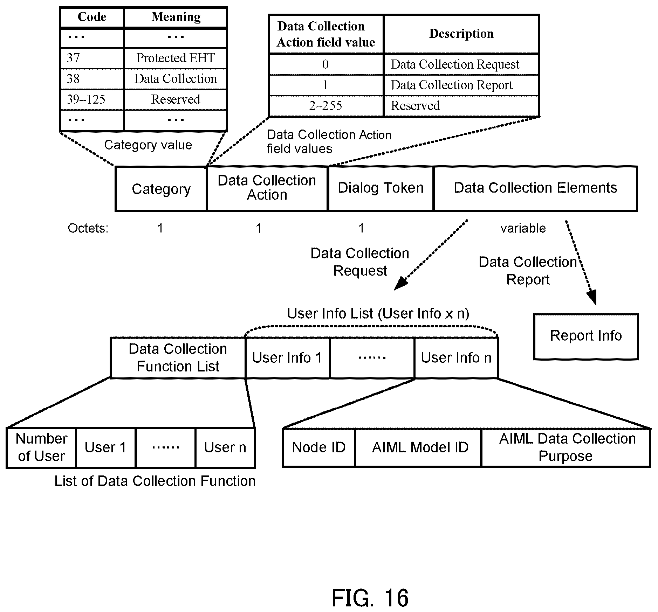

FIG. 16 shows the structure of a Data Collection Action frame. The Action frame includes Category, Data Collection Action, and Data Collection Elements. The Category field has Code defined corresponding to its content. As shown in FIG. 16, when the Code of the Category is the currently undefined value 38, the frame is defined as the Data Collection Action frame. FIG. 16 shows an example with Code 38, but the value may be defined with other undefined values.

When the Category is Data Collection, a Data Collection Action field is provided. The Data Collection Action field defines actions related to Data Collection, such as a Data Collection Request or Data Collection Report. For example, FIG. 16 defines a Data Collection Action field value = 0 as Data Collection Request and the Data Collection Action field value = 1 as a Data Collection Report.

The content of the Data Collection Elements is determined by whether it is a Data Collection Request or a Data Collection Report.

In the case of the Data Collection Request, the content of the Data Collection Elements includes Data Collection Function List and User Info List, similar to Embodiment 1. The User Info List includes User Info 1 to n. Each of User Info 1 to n includes, for example, Node ID, AIML Model ID information (AIML Model ID), and the data collection purpose (AIML Data Collection Purpose). The AIML Model ID information is as shown in FIG. 11, and the data collection purpose may be as shown in FIG. 12.

In the case of a Data Collection Report, the content of the Data Collection Elements is the content of the Report specified in the Data Collection Request.

Thus, when the Category of an Action frame is a specific value, it is defined that the Action frame contains Data Collection information, allowing a Data Collection format for AI/ML to be specified for each User.

### <Embodiment 4>

In Embodiment 4, Data Collection Information Element instructing AIML Data Collection is indicated in Management frames.

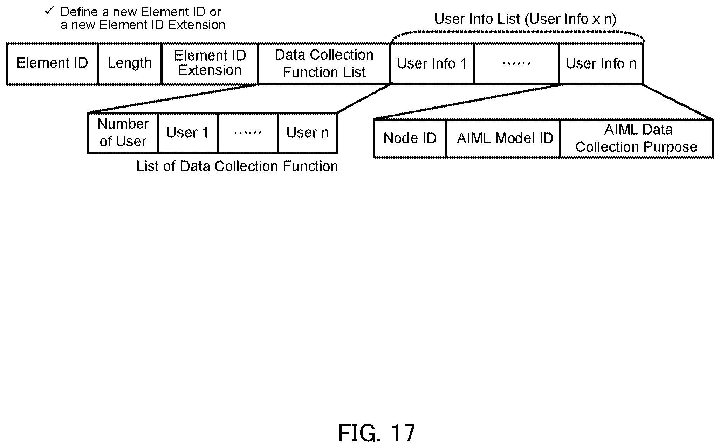

FIG. 17 shows an example configuration of Data Collection Information Element. The element may be recognized as Data Collection Information Element when the Element ID or Element ID Extension is defined with a specific undefined value. As shown in FIG. 17, the Data Collection Information Element includes Data Collection Function List and User Info List. The content of the Data Collection Function List and User Info List is the same as in Embodiment 1. The Data Collection Function List includes the number of users and the Data Collection Function for each user. The Data Collection Function is indicated by the Data Collection Function ID, which is as shown in FIG. 10. The User Info List includes User Info 1 to n. Each of User Info 1 to n includes, for example, Node ID, AIML Model ID information (AIML Model ID), and the data collection purpose (AIML Data Collection Purpose). The AIML Model ID information is as shown in FIG. 11, and the data collection purpose may be as shown in FIG. 12.

The Data Collection Information Element thus configured is included and indicated in Management frames such as Beacon frames, Association Request/Response frames, Probe Request/Response frames, and Action frames.

Thus, by indicating the Data Collection Information Element containing Data Collection information in the Management frames, a Data Collection format for AI/ML is specified for each User.

The interface names (frame names) and the names of fields or subfields described in Embodiments 1 to 4 may also be other names.

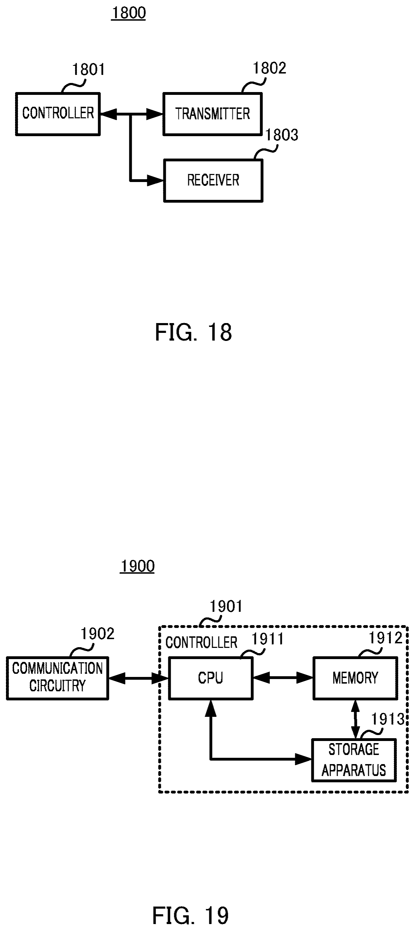

FIG. 18 shows the configuration of STA 1800. STA 1800 includes controller 1801, transmitter 1802, and receiver 1803.

Controller 1801 (e.g., corresponding to control circuitry) controls transmitter 1802 and receiver 1803 based on signals received by receiver 1803 or signals input from an input (not illustrated) in the STA. Both the SME and MLME are functions present in controller 1801. In another example, controller 1801 includes the function of the MLME and may include part of the function of the SME. In other words, part or all of the SME functions may be executed in a communication apparatus different from the STA (not illustrated) (e.g., another STA, another access point (AP), a wireless Local Area Network (LAN) controller, a Multi-AP coordinator, a cloud server, Software as a Service (SaaS), a virtual machine (VM), or a container).

Transmitter 1802 (e.g., corresponding to transmission circuitry) transmits signals to the counterpart STA.

Receiver 1803 (e.g., corresponding to reception circuitry) receives signals from the counterpart STA.

Transmitter 1802 and receiver 1803 may together form a communicator.

FIG. 19 shows the configuration of another STA 1900. Another STA 1900 includes controller 1901 and communication circuitry 1902. Controller 1901 includes the function of the SME. Communication circuitry 1902 communicates with the counterpart STA (e.g., STA 1800). Controller 1901 and communication circuitry 1902 may communicate using communication primitives (messages, signals) between the SME and MLME as described in each of the embodiments. Controller 1901 may include CPU 1911, memory 1912, and storage apparatus 1913. CPU 1911 executes the function of the SME. Memory 1912 is used when CPU 1911 executes processing. Storage apparatus 1913 stores software related to the function of the SME (e.g., binaries, executable files, program code, container images). CPU 1911 may transfer the software stored in storage apparatus 1913 to memory 1912 to execute the function of the SME.

Although the embodiments have been described above with reference to the drawings, the present disclosure is not limited to these examples. Obviously, a person skilled in the art would arrive at variations and modifications within a scope described in claims. It is understood that these variations and modifications are within the technical scope of the present disclosure. In addition, the components in the embodiments may be optionally combined without departure from the spirit of the present disclosure.

In the description of the embodiment described above, the term, such as "part" or "portion" or the term ending with a suffix, such as "-er" "-or" or "-ar" may be replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may be a wireless communication apparatus (also referred to as a wireless apparatus). The communication apparatus may comprise a transceiver and processing/control circuitry. The transceiver may comprise and/or function as a receiver and a transmitter. The transceiver, as the transmitter and receiver, may include a Radio Frequency (RF) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

In recent years, in Internet of Things (IoT) technology, Cyber Physical Systems (CPSs), which are a new concept of creating new added value by information cooperation between a physical space and cyberspace, has attracted attention. This CPS concept can also be adopted in the above embodiment.

That is, a basic configuration of the CPSs is, for example, such that an edge server disposed in the physical space and a cloud server disposed in the cyberspace can be connected to each other via a network, and processes can be distributedly processed by processors mounted in these servers. Here, it is preferable that pieces of processed data generated in the edge server or the cloud server be generated on a standardized platform. By using such a standardized platform, it is possible to efficiently build a system including various sensor groups and IoT application software.
(1) A wireless apparatus according to one exemplary embodiment of the present disclosure includes a controller, which in operation, generates a frame containing an AIML Data Collection subfield instructing a Station (STA) compatible with Artificial Intelligence (AI)/Machine Learning (ML) to transmit data; and a communicator, which in operation, transmits the frame generated.
(2) The wireless apparatus according to one exemplary embodiment of the present disclosure is the wireless apparatus of (1), in which the frame is defined when the Trigger Type has a specific value.
(3) The wireless apparatus according to one exemplary embodiment of the present disclosure is the wireless apparatus of (2), in which the frame contains Data Collection Function and User Info, the Data Collection Function includes Data Collection Function ID and a Data Collection function variant, the User Info contains AIML Model ID and AIML Data Collection Purpose, the AIML Model ID contains an AIML model (learning type) and a type of information requested, and the AIML Data Collection Purpose contains a state of AIML and the type of information requested.
(4) The wireless apparatus according to one exemplary embodiment of the present disclosure is the wireless apparatus of (1), in which the frame is defined when a Subtype value or a Control Frame Extension value of a Frame Control field has a specific value.
(5) The wireless apparatus according to one exemplary embodiment of the present disclosure is the wireless apparatus of (1), in which the frame is defined when Category of an Action frame has a specific value.
(6) The wireless apparatus according to one exemplary embodiment of the present disclosure is the wireless apparatus of (1), in which the frame is defined in a Management frame.
(7) A wireless communication method according to one exemplary embodiment of the present disclosure includes: generating a frame containing an AIML Data Collection subfield instructing a Station (STA) compatible with Artificial Intelligence (AI)/Machine Learning (ML) to transmit data; and transmitting the frame generated.

The disclosures of the specification, drawings, and abstract contained in Japanese Patent Application No. 2023-014580, filed on February 2, 2023, are all incorporated herein by reference.

### Industrial Applicability

An exemplary embodiment of the present disclosure is useful for a wireless apparatus.

### Reference Signs List

1801, 1901 Controller
1802 Transmitter
1803 Receiver
1902 Communication circuitry
1911 CPU
1912 Memory
1913 Storage apparatus

## Claims

1. A wireless apparatus, comprising:
a controller, which in operation, generates a frame containing an AIML Data Collection subfield instructing a Station (STA) compatible with Artificial Intelligence (AI)/Machine Learning (ML) to transmit data; and
a communicator, which in operation, transmits the frame generated.

2. The wireless apparatus according to claim 1, wherein
the frame is defined when Trigger Type has a specific value.

3. The wireless apparatus according to claim 2, wherein:
the frame contains Data Collection Function and User Info,
the Data Collection Function includes Data Collection Function ID and a Data Collection function variant,
the User Info contains AIML Model ID and AIML Data Collection Purpose,
the AIML Model ID contains an AIML model (learning type) and a type of information requested, and
the AIML Data Collection Purpose contains a state of AIML and the type of information requested.

4. The wireless apparatus according to claim 1, wherein
the frame is defined when a Subtype value or a Control Frame Extension value of a Frame Control field has a specific value.

5. The wireless apparatus according to claim 1, wherein
the frame is defined when Category of an Action frame has a specific value.

6. The wireless apparatus according to claim 1, wherein
the frame is defined in a Management frame.

7. A wireless communication method, comprising:
generating a frame containing an AIML Data Collection subfield instructing a Station (STA) compatible with Artificial Intelligence (Al)/Machine Learning (ML) to transmit data; and
transmitting the frame generated.
